# EUROPÄISCHE PATENTANMELDUNG

(11) **EP 2 127 958 A1**
(43) Veröffentlichungstag der Anmeldung: **02.12.2009**
(21) Anmeldenummer: 09156624.0
(22) Anmeldetag: 30.03.2009
(51) Int. Cl.: B60R 21/13

(54) **Überrollschutzsystem für Personenkraftwagen**

(30) Priorität: 30.05.2008 DE 102008002138
(71) Anmelder: ISE Automotive GmbH, 51702 Bergneustadt (DE)
(72) Erfinder: Beki, Gürkan, 51766, Engelskirchen (DE)
(74) Vertreter: Fuchs

(57) **Zusammenfassung**

Die Erfindung betrifft ein Überrollschutzsystem für Personenkraftwagen mit einem ausfahrbaren Überrollkörper (1), der in einer Ausgangsstellung mittels einer Haltevorrichtung gehalten wird und in eine Funktionsstellung mittels einer Verriegelungsvorrichtung gegen Wiedereinfahren gesichert wird, sowie mit einem Ausfahrantrieb und einem Aktuator (2) zum Lösen der Haltevorrichtung.

Bei derartigen Überrollschutzsystemen werden üblicherweise gesonderte Halte- und Verriegelungsvorrichtungen vorgesehen, was technisch und wirtschaftlich sehr aufwändig ist.

Zur Vereinfachung wird erfindungsgemäß vorgeschlagen, die Haltevorrichtung und die Verriegelungsvorrichtung in einer Baueinheit (3) zusammenzufassen. Die Baueinheit ist seitlich neben dem Überrollkörper (1) in einem Gehäuse (16) angeordnet. Mittels der Montageelemente (14 und 15) kann das Überrollschutzsystem an der Fahrzeugkarosserie befestigt und die Baueinheit (3) fahrzeugfest montiert werden. Beim ausgefahrenen Überrollkörper (1) greift ein Eingriffselement der Baueinheit (3) in die Verriegelungsausnehmung (6) des Überrollkörpers (1) ein.

## Beschreibung

Die Erfindung betrifft ein Überrollschutzsystem für Personenkraftwagen mit einem ausfahrbaren Überrollkörper, der in einer Ausgangsstellung mittels einer Haltevorrichtung gehalten und in einer Funktionsstellung mittels einer Verriegelungsvorrichtung gegen Wiedereinfahren gesichert wird, sowie mit einem Ausfahrantrieb und einem Aktuator zum Lösen der Haltevorrichtung.

Mit derartigen Überrollschutzsystem werden Personenkraftwagen ausgestattet, die im Falle eines Überschlages den Insassen keinen ausreichenden Schutz bieten, wie Cabrios, bei denen kein Dach vorgesehen ist oder bei denen das Dach abnehmbar oder einfaltbar ist und bei denen starre, nicht ausfahrbare Überrollkörper aus optischen Gründen nicht in Betracht kommen.

Dabei müssen die Überrollkörper in einer zurückgezogenen Ausgangsstellung gegen unbeabsichtigtes Ausfahren und der ausgefahrene Überrollkörper in der Funktionsstellung gegen Wiedereinfahren gesichert werden.

Als Ausfahrantrieb werden vielfach mechanisch vorgespannte Federn oder andere Kraftspeicher verwendet, die mittels einer lösbaren Haltevorrichtung in der Ausgangsstellung blockiert sind. Ähnlich wie bei Airbags wird mittels Beschleunigungssensoren ein Signal generiert, das die Aktivierung des Überrollschutzsystems auslöst, wobei die Haltevorrichtung durch einen Aktuator gelöst und das Ausfahren des Überrollkörpers freigegeben wird. Eine solche Haltevorrichtung ist in der deutschen Patentschrift 100 27 753 C1 beschrieben.

In der Funktionsstellung soll der ausgefahrene Überrollkörper das überschlagen Fahrzeug am Boden abstützen und einen Schutzraum für die Insassen bilden. In dieser Stellung muss der Überrollkörper gegen Wiedereinfahren verriegelt werden, wozu vielfach in Eingriffsrichtung vorgespannte, selbsttätig in eine Ausnehmung des Überrollkörpers eingreifende Rastnocken oder dergleichen vorgesehen werden. Aus der DE 100 27 253 C1 und der DE 198 38 989 C1 sind Verriegelungsvorrichtungen dieser Art bekannt.

Bisher hat man die Halte- und Verriegelungsfunktion als separate technische Aufgabe behandelt und dementsprechend gesonderte Vorrichtungen für die Fixierung des Überrollkörpers in der Ausgangsstellung und in der Funktionsstellung konzipiert (vergleiche DE 100 27 753 C1). Der damit verbundene technische und wirtschaftliche Aufwand ist verhältnismäßig hoch und ein erheblicher Nachteil für die Konkurrenzfähigkeit derartiger Produkte.

Der Erfindung liegt die Aufgabe zugrunde, ein Überrollschutzsystem der eingangs genannten Art zu vereinfachen und insbesondere preisgünstiger zu gestalten.

Zur Lösung dieser Aufgabe wird erfindungsgemäß vorgeschlagen, dass die Haltevorrichtung und die Verriegelungsvorrichtung in einer Baueinheit zusammengefasst sind.

Dem liegt die Erwägung zugrunde, dass beide Vorrichtungen eine nahezu identische technische Aufgabe erfüllen müssen, nämlich eine translatorische Bewegung des ausfahrbaren Überrollkörpers sowohl in der Ausgangsstellung als auch in der Funktionsstellung zu verhindern, wobei allerdings die Sicherung für entgegen gesetzte Bewegungsrichtungen ausgelegt werden muss.

Die Lösung der Aufgabe beruht ferner auf der Überlegung, dass für das Ausrasten des Eingriffelementes für die Haltefunktion, das mittels einer Feder in Eingriffsrichtung vorgespannt ist, die Kraft des Ausfahrantriebs nutzbar gemacht werden kann und dass der sonst das Ausrasten bewirkende Aktuator nur noch für eine Sicherung gegen Ausrasten konzipiert werden muss, solange das Überrollschutzsystem nicht aktiviert werden soll.

Unter Berücksichtigung dieser Erwägungen ist es möglich, die Haltevorrichtunhg und die Verriegelungsvorrichtung in einer Baueinheit zusammen zu fassen, die beide Funktionen mit nahezu auf die Hälfte reduziertem Aufwand erfüllen kann.

In weiterer Ausbildung des Erfindungsgedankens ist vorgesehen, dass die Baueinheit fahrzeugfest neben dem Überrollkörper angeordnet ist und ein bewegliches Sperrelement umfasst, das sowohl für den Eingriff in eine Halteausnehmung als auch in eine Verriegelungsausnehmung des Überrollkörpers ausgebildet ist.

Ferner ist es zweckmäßig, wenn das für zwei Funktionen konzipierte Sperrelement wie bei herkömmlichen Haltevorrichtungen und Verriegelungsvorrichtungen mittels einer Feder in Eingriffsrichtung vorgespannt ist.

Das Sperrelement ist vorzugsweise mit getrennten Elementen für die Haltefunktion und die Verriegelungsfunktion ausgestattet. Das Eingriffselement für die Haltefunktion ist gegen Austritt aus der Halteausnehmung gesichert, solange das Überrollschutzsystem nicht aktiviert wird.

Dementsprechend ist weiter vorgesehen, dass der Halteeingriff vom Aktuator entsichert werden kann, wenn das Überrollschutzsystem aktiviert wird.

Insbesondere ist das Sperrelement vom Ausfahrantrieb in Gegen-Eingriffsrichtung bewegbar und das Eingriffselement für die Haltefunktion aus der Halteausnehmung heraustreibbar, wenn das Überrollschutzsystem aktiviert und der Überrollkörper in die Funktionsstellung ausgefahren wird.

Eine besonders vorteilhafte Ausführungsform der Baueinheit ist den Unteransprüchen 9 bis 13 beschrieben.

Weitere Einzelheiten werden anhand der Darstellungen in den Figuren 1 bis 5 näher beschrieben.

Es zeigen:
- Fig. 1: ein Überrollschutzsystem in Ausgangsstellung,
- Fig. 2: das Überrollschutzsystem gemäß Fig. 1 mit geöffnetem Gehäuse der Baueinheit,
- Fig. 3: einen Überrollkörper in Funktionsstellung,
- Fig. 4: in vergrößerter Darstellung die Haltevorrichtung im Eingriff,
- Fig. 5: die Haltevorrichtung nach dem Lösen der Eingriffssicherung.

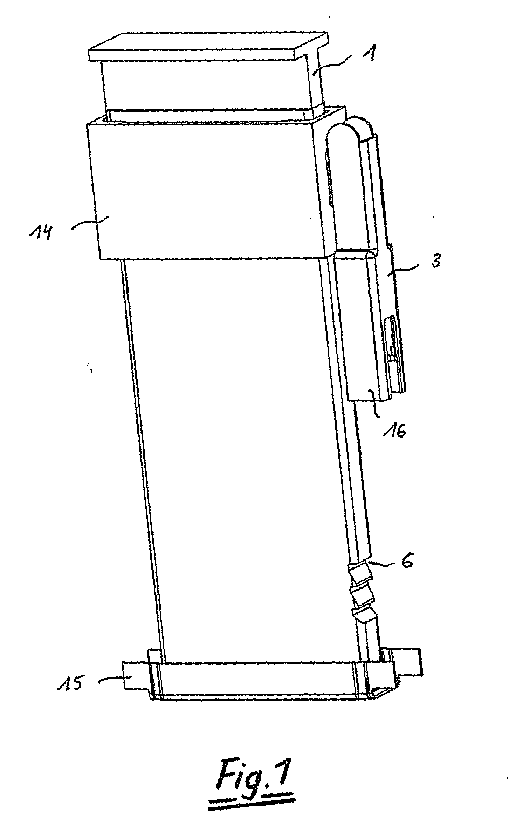

Das Überrollschutzsystem gemäß Fig. 1 umfasst einen ausfahrbaren Überrollkörper 1, der mittels Montageelementen 14 und 15 an der Fahrzeugkarosserie befestigt werden kann. In der seitlich vom Überrollkörper 1 angeordneten Baueinheit 3, die in dem geschlossenen Gehäuse 16 untergebracht ist, sind die Haltevorrichtung und die Verriegelungsvorrichtung zusammengefasst. Am unteren Ende des Überrollkörpers 1 ist noch die Verriegelungsausnehmung 6 ersichtlich, die üblicherweise mehrfach übereinander ausgeführt wird, um sicherzustellen, dass der Überrollkörper 1 gegen Wiedereinfahren auch dann gesichert ist, wenn er aus irgendwelchen Gründen die vorgesehene Funktionsstellung nicht ganz erreicht.

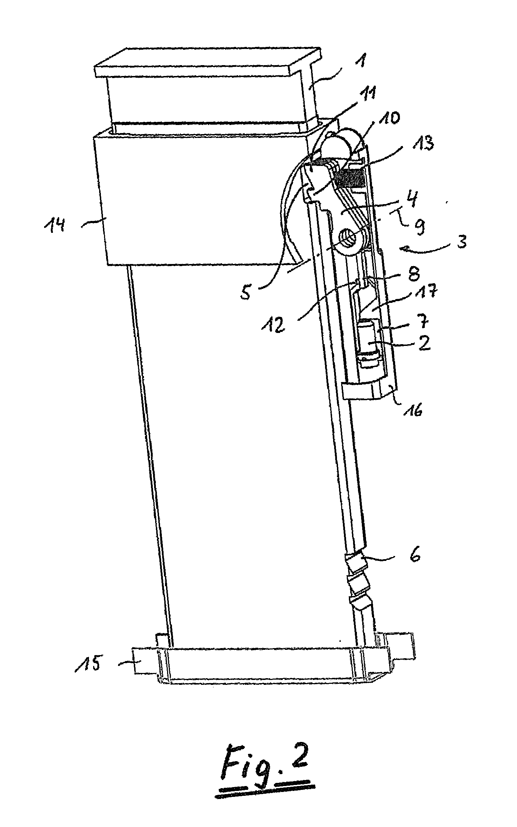

Die Fig. 2 zeigt das Überrollschutzsystem gemäß Fig. 1 mit offenem Gehäuse 16. Die Bezugsziffern 14, 15 und 6 bezeichnen wiederum die Montageelemente bzw. Verriegelungsausnehmungen.

Die Baueinheit 3 umfasst bei dem Ausführungsbeispiel eine um eine Schwenkachse 9 schwenkbare Klinke 4 mit einem Eingriffselement 10 für die Haltefunktion und einem Eingriffselement 11 für die Verriegelungsfunktion. Die Klinke 4 ist mittels einer Feder 13 in Eingriffsrichtung vorgespannt. In der dargestellten Ausgangsstellung greift das Eingriffselement 10 in die Halteausnehmung 5 ein. Die Klinke 4 ist bezüglich der Schwenkachse 9 auf der gegenüberliegenden Seite mit einem Hebel 8 ausgestattet, der in der dargestellten Position von einem Halteglied 12 gegen ein Verschwenken in Gegen-Eingriffsrichtung gesichert ist. Das Halteglied 12 ist Teil eines Schlittens 7, der vom Aktuator 2, der sich an einer gehäusefesten Schulter 17 abstützt, nach unten verschiebbar ist, so dass die Bauteile 8 und 12 außer Eingriff geraten.

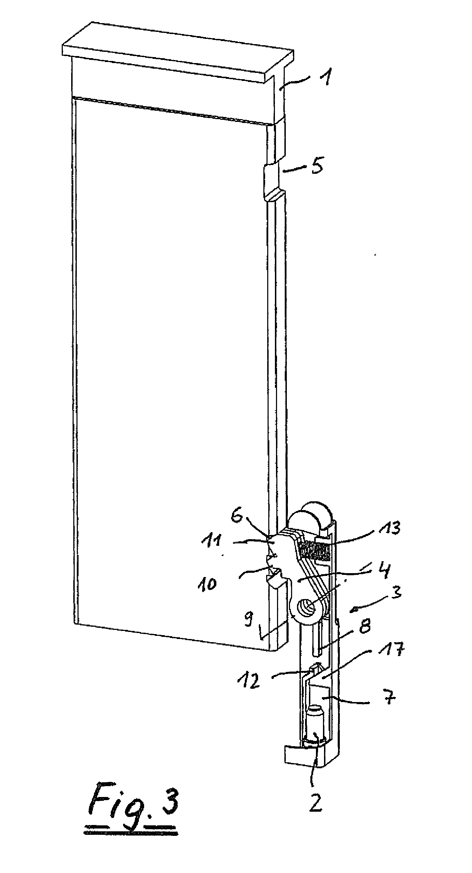

Aus der Darstellung gemäß Fig. 3 ist der Überrollkörper 1 in ausgefahrener Funktionsstellung ersichtlich. In der Nähe des oberen Endes ist die Hautausnehnmung angeordnet. Nachdem die Bauteile 8 und 12 außer Eingriff gebracht worden sind, indem der Schlitten 7 vom Aktuator nach unten verschoben wurde, konnte die Klinke 4 vom nicht dargestellten Ausfahrantrieb in Gegen-Eingriffsrichtung um die Achse 9 verschwenkt werden und der Überrollkörper 1 in die dargestellte Funktionsstelung ausfahren. In dieser Position wird der Überrollkörper 1 durch die von der Feder 13 in Eingriffsrichtung vorgespannten Klinke verriegelt, indem das Eingriffselement 11 in die Verriegelungsausnehmung 6 eingreift.

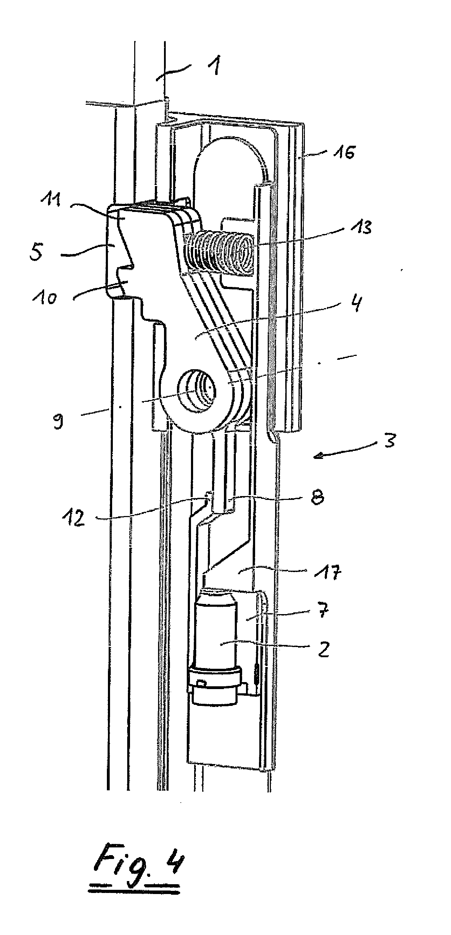

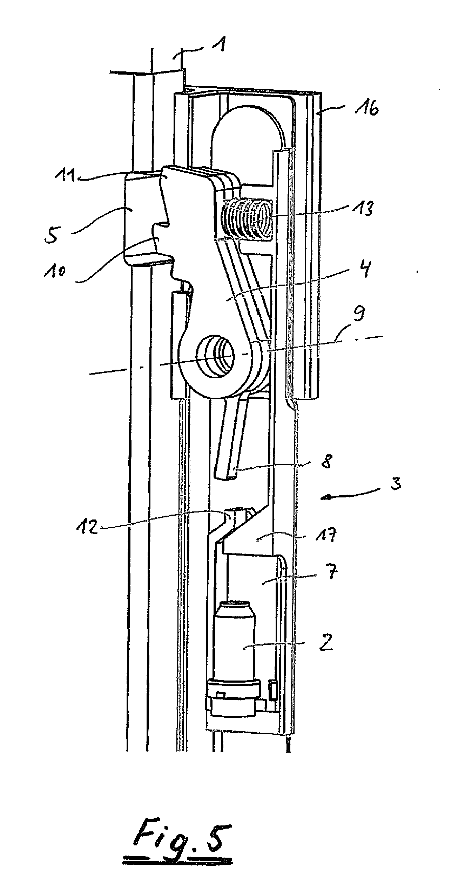

In den Figuren 4 und 5 ist das Ausführungsbeispiel der erfindungsgemäßen Baueinheit 3 noch einmal in vergrößerter Darstellung gezeigt. Alle Bezugsziffern haben die gleiche Bedeutung wie in den Figuren 1 bis 3. Aus Fig. 4 ist ersichtlich, dass der Hebel 8 am Halteglied 12 anliegt und dass dadurch die Klinke 4 gegen ein Verschwenken in Gegen-Eingriffsrichtung gesichert ist. Wenn der Schlitten 7 und damit das Halteglied 12 vom Aktuator 2, der sich an der Schulter 17 abstützt, nach unten gefahren wird, kommen die Bauteile 8 und 12 außer Eingriff und die Klinke 4 kann in Gegen-Eingriffsrichtung unter weiterer Kompression der Feder 13 um die Achse 9 geschwenkt werden. Dazu wird erfindungsgemäß der nicht dargestellte Ausfahrantrieb benutzt, der eine wesentlich größere Kraft entwickelt als die Feder 13 und der beim Ausfahren des Überrollkörpers 1 das Eingriffselement 10 aus der Halteausnehmung 5 herausdrückt. Zur Vermeidung von Wiederholungen wird auf die anderen Bezugsziffern nicht noch einmal eingegangen.

### Bezugszeichenliste

- 1: Überrollbügel
- 2: Aktuator
- 3: Baueinheit
- 4: Sperrelement, Klinke
- 5: Halteausnehmung
- 6: Verriegelungsausnehmung
- 7: Schlitten
- 8: Hebel
- 9: Schwenkachse
- 10: Eingriffselement
- 11: Eingriffselement
- 12: Halteglied
- 13: Feder
- 14: Montageelement
- 15: Montageelement
- 16: Gehäuse
- 17: Schulter

## Patentansprüche

1. Überrollschutzsystem für Personenkraftwagen mit einem ausfahrbaren Überrollkörper (1), der in einer Ausgangsstellung mittels einer Haltevorrichtung gehalten und in einer Funktionsstellung mittels einer Verriegelungsvorrichtung gegen Wiedereinfahren gesichert wird, sowie mit einem Ausfahrantrieb und einem Aktuator (2) zum Lösen der Haltevorrichtung, **dadurch gekennzeichnet, dass** die Haltevorrichtung und die Verriegelungsvorrichtung in einer Baueinheit (3) zusammengefasst sind.

2. Überrollschutzsystem nach Anspruch 1, **dadurch gekennzeichnet, dass** die Baueinheit (3) fahrzeugfest neben dem Überrollkörper (1) angeordnet ist.

3. Überrollschutzeinrichtung nach Anspruch 1 oder 2, **dadurch gekennzeichnet, dass** die Baueinheit (3) ein bewegliches Sperrelement (4) umfasst, das sowohl für den Eingriff in eine Halteausnehmung (5) als auch in eine Verriegelungsausnehmung (6) des Überrollkörpers (1) ausgebildet ist.

4. Überrollschutzsystem nach Anspruch 3, **dadurch gekennzeichnet, dass** das Sperrelement (4) mittels einer Feder (13) in Eingriffsrichtung vorgespannt ist.

5. Überrollschutzsystem nach Anspruch 3 oder 4, **dadurch gekennzeichnet, dass** das Sperrelement (4) ein Eingriffselement (10) für die Haltefunktion und ein Eingriffselement (11) für die Verriegelungsfunktion aufweist.

6. Überrolischutzsystem nach Anspruch 5, **dadurch gekennzeichnet, dass** das Eingriffselement (10) für die Haltefunktion gegen Austritt aus der Halteausnehmung (5) gesichert ist.

7. Überrollschutzsystem nach Anspruch 6, **dadurch gekennzeichnet, dass** der Halteeingriff vom Aktuator (2) entsichert werden kann, wenn das Überrollschutzsystem aktiviert wird.

8. Überrollschutzsystem nach Anspruch 7, **dadurch gekennzeichnet, dass** das Sperrelement (4) vom Ausfahrantrieb in Gegen-Eingriffsrichtung bewegbar und das Eingriffselement (10) für die Haltefunktion aus der Halteausnehmung (5) heraustreibbar ist, wenn das Überrollschutzsystem aktiviert und der Überrollkörper (1) in die Funktionsstellung ausgefahren wird.

9. Überrollschutzsystem nach einem der Ansprüche 3 bis 7, **dadurch gekennzeichnet, dass** das Sperrelement eine um eine Schwenkachse (9) schwenkbare Klinke (4) ist, die vom Aktuator (2) gegen eine Schwenkbewegung in Gegen-Eingriffsrichtung gesichert ist.

10. Überrollschutzsystem nach Anspruch 9, **dadurch gekennzeichnet, dass** die Schwenkbewegung mittels eines Stiftes blockiert ist, der im Aktivierungsfall vom Aktuator (2) außer Eingriff bringbar ist.

11. Überrollschutzsystem nach Anspruch 9, **dadurch gekennzeichnet, dass** die Klinke (4) einstückig mit einem Hebel (8) ausgebildet ist, der bezüglich der Schwenkachse (9) gegenüber von den Eingriffselementen (10, 11) der Klinke (4) angeordnet ist und in der Ausgangslage endseitig an einem verschieblichen Halteglied (12) anliegt.

12. Überrollschutzsystem nach Anspruch 11, **dadurch gekennzeichnet, dass** das Halteglied (12) Teil eines Schlittens (7) ist, der im Aktivierungsfall vom Aktuator (2) derart verschiebbar ist, dass der Hebel (8) vom Halteglied (12) freigegeben wird und die Klinke (4) in Gegen-Eingriffsrichtung schwenkbar ist.

13. Überrollschutzsystem nach Anspruch 12, **dadurch gekennzeichnet, dass** das Eingriffselement (11) der von der Feder (13) in Eingriffsrichtung vorgespannten Klinke (4) für die Verriegelungsfunktion in die Verriegelungsausnehmung (6) eingreift, wenn der Überrollkörper (1) die Funktionsstellung erreicht hat.
